# EUROPÄISCHE PATENTSCHRIFT

(11) **EP 1 763 693 B1**
(45) Veröffentlichungstag und Bekanntmachung des Hinweises auf die Patenterteilung: **18.11.2009**
(21) Anmeldenummer: 04740565.9
(22) Anmeldetag: 02.07.2004
(51) Int. Cl.: H04N 7/14, H04N 5/247, H04N 5/225, G02B 23/24, G02B 7/14, G02B 13/00, G02B 15/10

(54) **VORRICHTUNG UND VERWENDUNG DER VORRICHTUNG ZUR AUFNAHME UND VERARBEITUNG EINES BILDES**
DEVICE AND USE THEREOF FOR CAPTURING AND PROCESSING AN IMAGE
DISPOSITIF POUR CAPTURER ET TRAITER UNE IMAGE, ET UTILISATION DE CE DISPOSITIF

(43) Veröffentlichungstag der Anmeldung: 21.03.2007
(73) Patentinhaber: Schölly Fiberoptic GmbH, 79211 Denzlingen (DE)
(72) Erfinder: SCHÖLLY, Werner, 79211 Denzlingen (DE)
(74) Vertreter: Maucher, Wolfgang
(86) Internationale Anmeldenummer: PCT/EP2004/007205
(87) Internationale Veröffentlichungsnummer: WO 2006/002674

(56) Entgegenhaltungen:
- EP-A- 1 566 974
- GB-A- 2 358 753
- JP-A- 2003 262 908
- US-A1- 2002 180 867
- US-A1- 2003 164 895
- US-A1- 2003 169 905
- US-B1- 6 532 035
- DATABASE WPI Section PQ, Week 200401 Derwent Publications Ltd., London, GB; Class P81, AN 2003-877366 XP002311991 & JP 2003 315905 A (SCALAR CORP) 6. November 2003 (2003-11-06) -& PATENT ABSTRACTS OF JAPAN Bd. 2003, Nr. 12, 5. Dezember 2003 (2003-12-05) -& JP 2003 315905 A (SCALAR CORP), 6. November 2003 (2003-11-06)
- DATABASE WPI Section PQ, Week 200407 Derwent Publications Ltd., London, GB; Class P82, AN 2004-066744 XP002311992 & JP 2004 004465 A (SONY ERICSSON MOBILE COMMUNICATIONS KK) 8. Januar 2004 (2004-01-08) -& PATENT ABSTRACTS OF JAPAN Bd. 2003, Nr. 12, 5. Dezember 2003 (2003-12-05) -& JP 2004 004465 A (SONY ERICSSON MOBILECOMMUNICATIONS JAPAN INC), 8. Januar 2004 (2004-01-08)

## Beschreibung

Die Erfindung betrifft eine Vorrichtung zur Aufnahme und Verarbeitung eines Bildes mit einer Bildübertragungseinrichtung und einer Bildverarbeitungseinrichtung sowie die Verwendung dieser Vorrichtung.

Zur Inspektion oder zur Untersuchung der Innen- und Außenseite von technischen Objekten wie Maschinen, Fahrzeugen, Produktionsanlagen, aber auch der Körperoberfläche und Körperhöhlungen von Menschen und Tieren sind vielfältige derartige Vorrichtungen bekannt. Beispielsweise werden in Medizin und Technik häufig Endoskope zur Betrachtung von schlecht zugänglichen Hohlräumen und Mikroskope zur starken Vergrößerung von Objekten insbesondere mit einer integrierten Leuchtelementen zur Ausleuchtung der abzubildenden Umgebung genutzt.

Zur Weiterverarbeitung der von einer Optik aufgenommenen Bilder kann an flexible und/oder starre optische Systeme oder Mikroskope oder dergleichen ein elektronischer Bildsensor, beispielsweise ein CCD- oder CMOS-Chip, montiert werden. Dadurch kann das aufgenommene Bild elektronisch weiterverarbeitet, beispielsweise in der Qualität oder Darstellungsart verändert, abgespeichert oder übertragen werden.

Für bestimmte Einsatzgebiete ist eine hohe Flexibilität der Anwendung solcher Vorrichtungen gefordert oder gewünscht, um beispielsweise ohne Netzstromanschluss und/oder ohne Computer-Netzwerkanschluss arbeiten zu können. Ein Betreiben der bekannten Vorrichtungen und/oder eine Übertragung der in elektronischer Form vorliegenden Bildinformationen ist in diesen Fällen bisher jedoch sehr kostenintensiv und mit hohem materiellem Aufwand verbunden.

Folgende Druckschriften belegen den bekannten Stand der Technik : EP 1566974 A, JP 2003 315 905A, US 2003/64895A, , US 2002180867A und JP 2003262908A.

Es besteht daher die Aufgabe, einen weitgehend ortsungebundenen Einsatz eines Mikroskops, eines flexiblen und/oder starren optischen Systems oder dergleichen optischer Geräte zu ermöglichen, wobei die aufgenommenen Bildinformationen auch an räumlich vom Einsatzort insbesondere sehr weit entfernten Orten anzeigbar oder gleichermaßen nutzbar sind.

Zur Lösung dieser Aufgabe schlägt die Erfindung eine Vorrichtung gemäß Anspruch 1 vor. Die Bildübertragungseinrichtung kann dabei ein flexibles und/oder starres System, beispielsweise ein Endoskop oder ein Mikroskop oder dergleichen optisches Gerät aufweisen oder sein, vor dessen Aufnahmeobjektiv sich das abzubildende Objekt befindet. Das Aufnahmeobjektiv ist wechselbar ausgebildet, um die optischen Eigenschaften der Bildübertragungseinrichtung an unterschiedliche Einsatzanforderungen anpassen zu können. Insbesondere zur Ausleuchtung von Hohlräumen oder anderen schlecht erreichbaren und/oder schlecht ausgeleuchteten Bereichen dient die Beleuchtungseinrichtung. Um verschiedenartige Bildübertragungseinrichtungen an das Kamerahandy koppeln zu können, ist die Verbindung zwischen der Adaptereinrichtung und dem Kamerahandy lösbar ausgebildet. Die Adaptereinrichtung bildet dabei eine optische Brücke beispielsweise zwischen dem kurzbrennweitigen Handyobjektiv und der Bildübertragungseinrichtung mit dem langbrennweitigen Aufnahmeobjektiv. Die Bildaufnahmeeinheit das Kamerahandys, beispielsweise ein CCD- oder CMOS-Chip, wandelt die Bildinformationen in elektrische Signale um und das Kamerahandy kann danach diese elektronischen Bildinformationen aufbereiten, konvertieren und anschließend beispielsweise als e-Mail oder MMS (Multimedia Message Service)-Nachricht über ein Mobilfunknetz drahtlos versenden oder per Infrarot- oder Bluetoothverbindung direkt zu einem Computer übertragen. Durch die in Zukunft weiter ansteigende Auflösung der Bildaufnahmeeinheit von Kamerahandys wird sich die Bildqualität und auch die Zahl der Einsatzzwecke für eine solche erfindungsgemäße Vorrichtung weiter erhöhen. Die dadurch auch größer werdende Datenmenge der zu versendenden Bilder kann über die ebenfalls in Zukunft weitere Verbreitung findenden Funknetze mit hoher Übertragungsgeschwindigkeit (zum Beispiel UMTS) in ausreichend kurzer Zeit übertragen werden. Ebenso ist dann auch eine Live-Videoübertragung anstelle von Einzelbildern möglich.
Durch die Integration der Kamera in das Mobiltelefon sind eine gute Handhabbarkeit der erfindungsgemäßen Vorrichtung, insbesondere auch ein geringes Gewicht und geringe Außenabmessungen vorhanden.

Eine vorteilhafte Ausführungsform der erfindungsgemäßen Vorrichtung sieht vor, dass die Adaptereinrichtung wenigstens ein Verbindungselement zur mechanischen Verbindung der Bildübertragungseinrichtung mit dem Kamerahandy, wenigstens einen optischen Adapter zur Kopplung der Bildübertragungseinrichtung mit der Kameraoptik des Kamerahandys und vorzugsweise einen Handgriff, in welchem zum Beispiel eine Lichtquelle angeordnet sein kann, aufweist. Die Adaptereinrichtung kann dabei so gestaltet sein, dass beim Verbinden des Kamerahandys mit der Adaptereinrichtung beispielsweise durch Einschieben, Einrasten, Einschnappen oder Einklemmen in das Verbindungselement eine mechanisch sichere Halterung des Kamerahandys an der Bildübertragungseinrichtung und insbesondere gleichzeitig eine funktionssichere Verbindung zwischen Kameraoptik des Kamerahandys und optischem Adapter erreicht wird. Der Handgriff an der Adaptereinrichtung erleichtert die Handhabung der gesamten Vorrichtung, sodass ein hohe und gleichzeitig sichere Beweglichkeit der Vorrichtung gegeben ist.

Zweckmäßig ist es, wenn die Bildübertragungseinrichtung wenigstens ein wechselbares Makroobjektiv aufweist. Durch ein derartiges Aufnahmeobjektiv können vor allem sehr nah an dem Aufnahmeobjektiv gelegene Bereiche in guter Qualität, das heißt ohne starke optische Verzerrungen, abgebildet werden. Makroobjektive weisen dafür auch eine bessere Tiefenschärfe auf als herkömmliche Mikroskopobjektive.

Ebenso für eine qualitativ hochwertige Abbildung dem Aufnahmeobjektiv naher Bereiche ist es vorteilhaft, wenn an dem Makroobjektiv ein Distanzring zum direkten Aufsetzen des Makroobjektivs auf den abzubildenden Gegenstand vorgesehen ist. Dadurch können auch kleine Bewegungen während der Bildaufnahme vermieden werden, sodass auch bei längeren Belichtungszeiten, insbesondere bei gering beleuchteten Objekten, scharfe Abbildungen erreicht werden können. Besteht der Distanzring aus transparentem Material, beispielsweise transparentem Kunststoff oder weist zumindest größere transparente Bereiche auf, vereinfacht dies die Positionierung des Aufnahmeobjektivs auf dem abzubildenden Gegenstand oder Objekt.

Für das Abschätzen der Größe der abgebildeten Objekte ist es zweckmäßig, wenn an dem Makroobjektiv eine im Wesentlichen transparente Strich- oder Rasterplatte zum Messen von Abständen oder dergleichen Maßen im aufgenommenen Bild vorgesehen ist. Dabei kann die Strich- oder Rasterplatte als lösbar befestigtes Vorsatzelement vor das Aufnahmeobjektiv ausgebildet sein, sodass die Strich- oder Rasterplatte für unterschiedliche Einsatzzwecke ausgetauscht oder auch weggelassen werden kann. Beispielsweise kann bei Druckmaschinen die Qualität der Druckwalze oder des Andrucks geprüft, dokumentiert und fernübertragen werden.

Um den Bereich vor dem Aufnahmeobjektiv in vorteilhafter Weise ausleuchten zu können, ist es zweckmäßig, wenn die Beleuchtungseinheit vorzugsweise ringförmig um die Öffnung des Makroobjektivs angeordnet ist. Die Beleuchtungseinheit kann beispielsweise aus mehreren LEDs (Leuchtdioden) oder auch aus mehreren lichtleitenden Fasern, die Licht von einer vom Aufnahmeobjektiv beabstandeten, beispielsweise einer im Handgriff angeordneten Lichtquelle übertragen, aufgebaut sein. Derartige Elemente sind vergleichsweise klein und können dennoch eine vergleichsweise große Lichtmenge abstrahlen. Die ringförmige Anordnung der LEDs oder der Enden lichtleitenden Fasern kann dadurch platzsparend erfolgen, sodass das Aufnahmeobjektiv in seinen gesamten Außenabmessungen nicht unnötig groß wird. Die LEDs und die Lichtleiter können dabei Licht oder Strahlung unterschiedlichster Wellenlängen im sichtbaren und/oder unsichtbaren Bereich, beispielsweise infrarote Strahlung oder UV-Licht oder sichtbares Licht unterschiedlicher Lichtfarbe, abhängig vom jeweiligen Einsatzzweck abstrahlen.

Erfindungsgemäß weist die Bildübertragungseinrichtung wenigstens ein optisches Linsensystem und/oder wenigstens einen Bildleiter zur Übertragung wenigstens eines Bildes wenigstens eines Objekts vor jeweils einem Objektiv der Bildübertragungseinrichtung auf. Eine Bildübertragungseinrichtung mit einem optischen Linsensystem kann Bilder in hoher Qualität übertragen. Ist beispielsweise eine biegsame Ausführung und/oder Ausführung mit geringen Abmessungen wie einem kleinen Durchmesser gewünscht, kann für die optische Übertragung der Bilder ein Bildleiter eingesetzt werden. Auch eine Kombination aus Linsensystem und Bildleiter für eine teilflexible Ausführung der Bildübertragungseinrichtung ist denkbar.

Für eine gleichzeitige Darstellung mehrerer Bilder zu der Bildaufnahmeeinheit des Kamerahandys weist die Bildübertragungseinheit mehrere optische Übertragungskanäle auf , wobei jedem Übertragungskanal jeweils ein Objektiv sowie ein optisches Linsensystem und/oder ein Bildleiter zugeordnet ist. Diese Bilder können dann gleichzeitig oder nacheinander auf einer Anzeigeeinheit des Kamerahandys angezeigt und/oder weiterübertragen werden. Die voneinander getrennten optischen Übertragungskanäle können dabei unterschiedlich aufgebaut sein, beispielsweise mit einem weitgehend starren optischen Übertragungskanal mit einem optischen Linsensystem und einem anderen, flexibel ausgeführten Übertragungskanal mit einem Bildleiter.

Vorteilhafterweise ist dabei jedem der optischen Übertragungskanäle jeweils eine Beleuchtungseinheit mit wenigstens einer Lichtführung zugeordnet, sodass jeder abzubildende Bereich vor dem jeweiligen Aufnahmeobjektiv entsprechend dort vorherrschenden Bedingungen beleuchtet werden kann, wobei vorzugsweise die Beleuchtungseinheiten unabhängig voneinander einstellbar sind.

Für eine genaue Einstellbarkeit der Bildqualität ist es zweckmäßig, wenn vorzugsweise am Aufnahmeobjektiv ein Fokussierring zur Justierung der Brennweite des Aufnahmeobjektivs und/oder der Bildübertragungseinrichtung vorgesehen ist und wenn der Fokussierring an dem Distanzring angeordnet ist.

Zweckmäßig ist es dabei, wenn die Adaptereinrichtung und/oder die Bildübertragungseinrichtung wenigstens ein vorzugsweise in seiner Länge verstellbares Distanzelement aufweist. Dadurch kann insbesondere die erreichbare Vergrößerung des aufgenommenen Bildes auf dem Weg zur Bildaufnahmeeinheit des Kamerahandys eingestellt werden. Das Distanzelement kann dabei beispielsweise als Distanzrohr aus einem oder mehreren Rohrstücken oder als breiter Distanzring aus einem oder mehreren Ringstücken ausgeführt sein. Die Einstellung der Länge des Distanzelements kann beispielsweise durch Verdrehen ineinandergeschraubter Rohrstücke erfolgen, wodurch eine axiale Längenverstellung des gesamten Distanzrohres erreicht werden kann.

Für eine genaue Einstellbarkeit der Vergrößerung der Bildübertragungseinrichtung ist es vorteilhaft, wenn insbesondere in Kombination mit dem Distanzelement vorzugsweise am Aufnahmeobjektiv ein Zoom-Ring zur Justierung der Vergrößerung des Aufnahmeobjektivs und/oder der Bildübertragungseinrichtung vorgesehen ist und wenn der Zoom-Ring an dem Distanzring angeordnet ist. Dadurch kann nach einer vergleichsweise groben Einstellung der Vergrößerung mit dem Distanzelement eine Feineinstellung, beispielsweise zum Erzeugen von möglichst maßstabsgetreuen Abbildungen in Zusammenhang mit der Strich- oder Rasterplatte, vorgenommen werden. Der Zoom-Ring kann dabei mit dem Fokussierring in einem gemeinsamen Bedienelement kombiniert sein.

Eine vorteilhafte Ausführungsform der erfindungsgemäßen Vorrichtung sieht vor, dass vorzugsweise benachbart zum Aufnahmeobjektiv wenigstens ein Sensorelement, beispielsweise ein Temperatur-, Strahlungs-, oder Feuchtesensor zur Erfassung wenigstens einer physikalischen Messgröße, wie beispielsweise der Temperatur oder von Strahlung einer bestimmten Wellenlänge (Licht) vorgesehen ist. Dadurch können in dem Bereich der Bildaufnahme weitere Informationen gewonnen werden, die mit dem Bildinhalt in engem Zusammenhang stehen. Beispielsweise kann ein Bild eines Objekts zusammen mit dessen Temperatur oder seiner radioaktiven Strahlungswerte aufgenommen werden und insbesondere diese Zusatzinformationen gemeinsam mit dem Bildinhalt weiterverarbeitet werden. Die Zusatzinformationen können zum Beispiel als Zahlenwerte in das aufgenommene Bild eingeblendet werden.

Die erfindungsgemäße Vorrichtung kann insbesondere zur Kontrolle und Überwachung von Inspektionsstellen, vorzugsweise in Hohlräumen in Maschinen, Fahrzeugen, Produktionsanlagen oder dergleichen technischen Vorrichtungen und zur vorzugsweise drahtlosen Übertragung der aufgenommenen Bildinhalte an eine räumlich vom Ort der Bildaufnahme getrennte elektronische Empfangseinrichtung, beispielsweise an wenigstens ein zweites Kamerahandy oder an wenigstens einen Computer verwendet werden. Durch das geringe Gewicht, die geringen Außenabmessungen und die weitgehende Unabhängigkeit der erfindungsgemäßen Vorrichtung vom Stromnetz ist die erfindungsgemäße Vorrichtung weitgehend ortsunabhängig und für vielfältige Anwendungsfälle geeignet. Eine Energieversorgung der Vorrichtung kann beispielsweise auch durch eine Solarstromversorgung verwirklicht werden, insbesondere zum Aufladen der Akkus und/oder zum direkten Betreiben der Vorrichtung.
Praktische Beispiele hierzu sind nachfolgend, teilweise vereinfacht, dargelegt.
a) Technische Überwachung: Bei Unsicherheit, ob eine Anlage noch eine weitere Periode TÜV bekommt, können Bilder die Situation erhärten oder aufweichen. Wiederum kann der Überwachungs-Fachmann, der irgendwo auf der Welt sitzt, direkt die Bilder des zu überwachenden Objekts sehen und seine Expertise dem Kollegen am Ort der Überwachung zur Verfügung stellen.
b) Materialprüfung: Bruchkanten, Rissbildungen, Rostbildungen können durch Bildaustausch mit zum Beispiel der Materialprüfungs-Anstalt in Braunschweig abgeglichen werden. Zudem entsteht durch die Speicherung der entsprechenden Bilder eine sehr umfangreiche Bilddatenbank.
c) Schadensdiagnose: Schadensabklärung bei defekten medizinischen und Industrieendoskopen. Durch die Aufnahme durch das Endoskop kann von den Experten festgestellt werden, ob sich eine Reparatur lohnt oder ob das Gerät besser getauscht wird. Damit sind Kosteneinsparungen beim Hersteller und beim Kunden verbunden. Durch die Geschwindigkeit der Diagnose kann der Bestand an Optiken reduziert werden.

Die erfindungsgemäße Vorrichtung kann außerdem zur Kontrolle von Körperhöhlungen und/oder -öffnungen von Menschen oder Tieren und zur vorzugsweise drahtlosen Übertragung der aufgenommenen Bildinhalte an eine räumlich vom Ort der Bildaufnahme getrennte elektronische Empfangseinrichtung, beispielsweise an wenigstens ein zweites Kamerahandys oder an wenigstens einen Computer verwendet werden.
Praktische Beispiele hierzu sind nachfolgend, teilweise vereinfacht, dargelegt.
a) Dermatologie: Eine Gruppe von niedergelassenen Hausärzten kann mit einem Dermatologen einen Verbund bilden. Für wenig Geld kann ein Bild direkt an den Dermatologen gesandt werden, der darüber entscheidet, ob er den Patienten sehen will oder ob es sich um eine harmlose Hautveränderung handelt.
b) Ophthalmologie: Eine spezielle ophthalmologische Sonde kann helfen, damit ein Sanitäter oder Hausarzt die Bilder zur Behandlungsberatung an einen Spezialisten schickt.
c) Telemedizin: In wenig besiedelten Ländern (z.B. Australien) kann die nächstgelegene Klinik um Rat gefragt werden, indem vorab die Bilder versandt werden.
d) Fleischbeschau: Der Tierarzt vor Ort kann in kritischen Fällen ein Bild an die nächsthöhere Veterinärstelle zur Abklärung senden. Damit muss er nicht alleine die Verantwortung tragen.

Eine weitere Verwendungsmöglichkeit der erfindungsgemäßen Vorrichtung ist die vergrößerte Abbildung von Gegenständen, insbesondere der Oberflächen der Gegenstände und die anschließende vorzugsweise drahtlose Übertragung der aufgenommenen Bildinhalte an eine räumlich vom Ort der Bildaufnahme getrennte elektronische Empfangseinrichtung, beispielsweise an wenigstens ein zweites Kamerahandys oder an wenigstens einen Computer. Praktische Beispiele hierzu sind nachfolgend, teilweise vereinfacht, dargelegt.
a) Versicherungen: Detailaufnahmen bei zweifelhaften Schadensfällen. Falls sich zum Beispiel durch Rissbildung an einem in Garantie befindlichen Ausrüstungsgegenstand ein Personenschaden ereignet, muss nicht die eigene Versicherung bezahlen, sondern die des Lieferanten. Die Bilder des vor Ort befindlichen Schadensinspektors können per MMS oder e-Mail an die Zentrale oder an die technischen Experten gesandt werden, zum Beispiel ein Versicherung-Technikzentrum.
b) Polizei: Spuren können bei Verdacht auf Serientäter von den Leuten vor Ort direkt an das Landeskriminalamt (LKA) oder Bundeskriminalamt (BKA) versandt werden, die mit Ihrer vorhandenen Bilddatenbank Vergleiche machen können. Auch umgekehrt kann LKA oder BKA Spurenbilder an die Leute vor Ort senden, um nach gleichen Spuren zu suchen und diese sofort zu dokumentieren.
c) Direkter Fingerabdruck: Die Vorrichtung kann so gestaltet werden, dass ein Fingerabdruck direkt von der Vorrichtung ins LKA oder BKA geschickt werden kann und ein automatischer Abdruckvergleich online stattfinden kann. Dasselbe trifft auf Lackspuren und Ähnliches zu.
d) Rauschgiftkontrolle: Bei Rauschgiftkonsum verändert sich die Größe der Pupille. Mit einer speziellen ophthalmologischen Ausführungsform der Vorrichtung kann dieser Zustand zweifelsfrei erkannt und mit Fernübertragung von einem Arzt bestätigt und dokumentiert werden.
e) Luftfahrt: Kritische Komponenten können in einem Regelzyklus mit hoher Vergrößerung aufgenommen und dokumentiert werden. Damit kann eine schleichende Verschlechterung einer Komponente frühzeitig erkannt und dokumentiert werden.
f) Automobilgarantie: Bei Garantieabklärungen, z.B. Lackschäden kann mit den Experten im Werk eine Bildkonferenz stattfinden und die Entscheidung ohne große Reisekosten getroffen werden.
g) Automobilzulieferer: Kontrolle und Dokumentation von Abnutzungen an Werkzeugen und Vorrichtungen. Juristische Abwehr durch Dokumentation bei späteren Schäden und teuren Rückrufaktionen.
h) Bahn: Bei kritischen Komponenten kann vor Ort eine Aufnahme gemacht und an die Zentrale gesandt werden. Kosteneinsparung durch Ferndiagnose und Erhöhung der Sicherheit.
i) Warenausgangs- und Wareneingangskontrolle: Überall dort wo die Oberfläche eine kritische Rolle spielt, kann mit Aufnahmen über eine Vorrichtung mit einem Mikroskop der Zustand dokumentiert werden. Dies erspart lange Qualitätsdiskussionen. Oberflächen sind am besten durch Bilder zu belegen. Bisher verwendete Kennwerte (Ra, RT) für Oberflächengüten geben nur eine Teilinformation über den Zustand einer Oberfläche, wobei Bildinformationen eine starke Aufwertung der Information darstellen.
j) Gemäldeexpertisen und Restaurationen: Durch die Erfassung und Bildübertragung ist ein Online-Austausch unter Experten sofort möglich und dokumentiert. Bei Fälschungen an Bildern und anderen Antiquitäten können diese sofort festgestellt werden.

Die erfindungsgemäße Vorrichtung kann in vorteilhafterweise insbesondere zur Kontrolle und Überwachung von Inspektionsstellen, vorzugsweise in Hohlräumen in Maschinen, Fahrzeugen, Produktionsanlagen oder dergleichen technischen Vorrichtungen mittels einer fest installierten Bildübertragungseinrichtung und/oder Adaptereinrichtung, an welche das Kamerahandy in Gebrauchsstellung gekoppelt ist und zur vorzugsweise drahtlosen Übertragung der aufgenommenen Bildinhalte an eine räumlich vom Ort der Bildaufnahme getrennte elektronische Empfangseinrichtung, beispielsweise an wenigstens ein zweites Kamerahandys oder an wenigstens einen Computer und/oder einen externen größeren Monitor verwendet werden.
Praktische Beispiele hierzu sind nachfolgend, teilweise vereinfacht, dargelegt.
a) Spezialmaschinen: Falls komplizierte, nur in geringen Stückzahlen gebaute Maschinen im In- und Ausland im Einsatz sind, können einzelne optische Übertragungskanäle an kritischen Stellen fest montiert werden. Ein Kamerahandy mit einem Betriebssystem kann so programmiert werden, dass eine Ferndiagnose über das Kamerahandy jederzeit möglich ist. Dadurch können große Summen an Reisekosten vermieden werden, da der Schaden eventuell bevor er eintritt, entdeckt wird. Gleichzeitig können von Ferne Reparaturhinweise online übermittelt und am Einsatzort direkt ausgeführt werden, das heißt, der Experte kann den Instandhaltungsleuten vor Ort Hinweise über Reparaturmöglichkeiten online geben.
b) Pharmazeutische und chemische Produktionsanlagen: Durch die Festinstallation von mehreren optischen Übertragungkanälen kann bei Produktionswechsel geprüft und dokumentiert werden, ob sich Ablagerungen an kritischen Stellen befinden und zu Verunreinigungen führen können.
c) Festinstallationen: Der installierte Teil kann in unwirtlicher Umgebung (Hitze, Druck, Vakuum etc.) sein und die Adaptereinrichtung mit dem Kamerahandy kann angeflanscht werden, ohne Schaden zu nehmen.
d) Schweißnahtüberwachung: Bei kritischen Komponenten bei konventionellen oder Kernkraftwerken. Eine laufende Dokumentation ist möglich. Eventuell auch als Festinstallation bei gefährlicher Umgebung. Durch Verwendung von strahlenresistenten Gläsern kann die Lebensdauer solcher Inspektionseinrichtungen bedeutend erhöht werden.
e) Kontrolle und Dokumentation an unförmigen Körpern: Die Aufnahmeobjektive mehrerer optischer Übertragungskanäle können so angeordnet sein, dass das Bild auf dem Kamerahandy die ganze Oberfläche bei hoher Vergrößerung zeigt.
f) Falschgeldprüfung: Da nur die Bundesbank zweifelsfrei Fälschungen entdecken kann, ist es vorstellbar, mit der Vorrichtung mehrere hoch vergrößerte Bilder an kritischen Stellen aufzunehmen. Gleichzeitig können beispielsweise einige Fluoreszenzsensoren prüfen, ob an den richtigen Stellen des aufgenommenen Bildes die entsprechende Fluoreszenzintensität vorhanden ist. Geschäftsbanken können Bilder von verdächtigen Scheinen per Kamerahandy an die Nationalbank übertragen und erhalten sofort die Expertise. Gleichzeitig entsteht bei der Nationalbank eine umfangreiche Bilddokumentation über Fälschungen.
g) Lagerüberwachungen: Beispielsweise bei Turbinen kann sowohl der Oberflächenzustand der Lagerumgebung online geprüft werden als auch eine Temperaturüberwachung über einen entsprechenden Temperatursensor stattfinden. In diesen Fällen handelt es sich um eine Festinstallation der Vorrichtung, wobei das fest installierte Kamerahandy von Ferne aktiviert werden kann und die Bilder und Temperaturdaten auf ein zweites Handy und/oder einen Computermonitor überträgt.
h) Kontrolle hermetisch abgeschlossener Bereiche: Z.B. beim Möbeltransport aus Fernost werden die verwendeten Container mit einem Gas gefüllt, welches Ungeziefer abtötet. Beim Öffnen des Containers, z.B. bei Zollkontrollen ist eine Kontrolle ohne Öffnen des Containers zum Schutz der Kontrolleure sowie der Umwelt wünschenswert. Dazu werden ein oder mehrere Arme eines flexiblen Endoskops, kombiniert mit einer oder mehrerer Gassensoren und/oder Temperatursensoren in den Container eingeführt und es können dadurch gleichzeitig der Inhalt des Containers sowie die Gaskonzentration oder ähnliche Messwerte übermittelt und kontrolliert werden.

Nachstehend sind Ausführungsformen der Erfindung anhand der Zeichnungen noch näher beschrieben. Es zeigt in zum Teil schematisierter Darstellung:
- Fig. 1 a) ,b) ,c): eine Seiten- (a), Rück- (b) und Vorderansicht (c) eines Kamerahandys gemäß eines Vergleichsbeispiels mit integrierter Kamera und einer Kameraoptik auf der Kamerahandy-Rückseite,
- Fig. 2: eine Seitenansicht der Vorrichtung in Explosionsdarstellung,
- Fig. 3 a),b),c): eine Seitenansicht (a) des Kamerahandys mit einer daran montierten Adaptereinrichtung in Explosionsdarstellung sowie eine Rück- (b) und Vorderansicht (c) des Kamerahandys,
- Fig. 4 a),b): eine Seitenansicht zweier Ausführungsformen eines optischen Adapters der Adaptereinrichtung mit (a) und ohne (b) Fokussierring mit drei Distanzelementen in Explosionsdarstellung,
- Fig. 5 a),b): eine Vorderansicht gemäß der Schnittlinien A-A und B-B in Fig. 4 zweier möglicher Ausführungsformen der Beleuchtung des optischen Adapters,
- Fig. 6: eine Seitenansicht der Bildübertragungseinrichtung mit vier optischen Übertragungskanälen in Explosionsdarstellung,
- Fig. 7: eine Vorderansicht der Bildübertragungseinrichtung entsprechend der Schnittlinie B-B in Fig. 6,
- Fig. 8 a),b): eine Vorderansicht zweier möglicher Ausführungsformen der Beleuchtung der Bildübertragungseinrichtung entsprechend der Schnittlinie A-A in Fig. 6,
- Fig. 9: eine Vorderansicht des Kamerahandys mit einer angedeuteten Darstellung der vier Bildbereiche der vier optischen Übertragungskanäle gemäß Fig. 6,
- Fig. 10: eine Seitenansicht der Bildübertragungseinrichtung mit vier optischen Übertragungskanälen, jeweils einem zugeordneten Sensorelement sowie einer Lichtsteuerbzw. regeleinrichtung in Explosionsdarstellung,
- Fig. 11 a),b): eine Vorderansicht zweier möglicher Ausführungsformen der Beleuchtung der Bildübertragungseinrichtung entsprechend der Schnittlinie A-A in Fig. 10,
- Fig. 12: eine Vorderansicht der Bildübertragungseinrichtung entsprechend der Schnittlinie C-C in Fig. 10,sowie

- Fig. 13: eine Vorderansicht des Kamerahandys mit einer angedeuteten Darstellung der vier Bildbereiche der vier optischen Übertragungskanäle sowie der vier Sensorelement-Informationen gemäß Fig. 10.

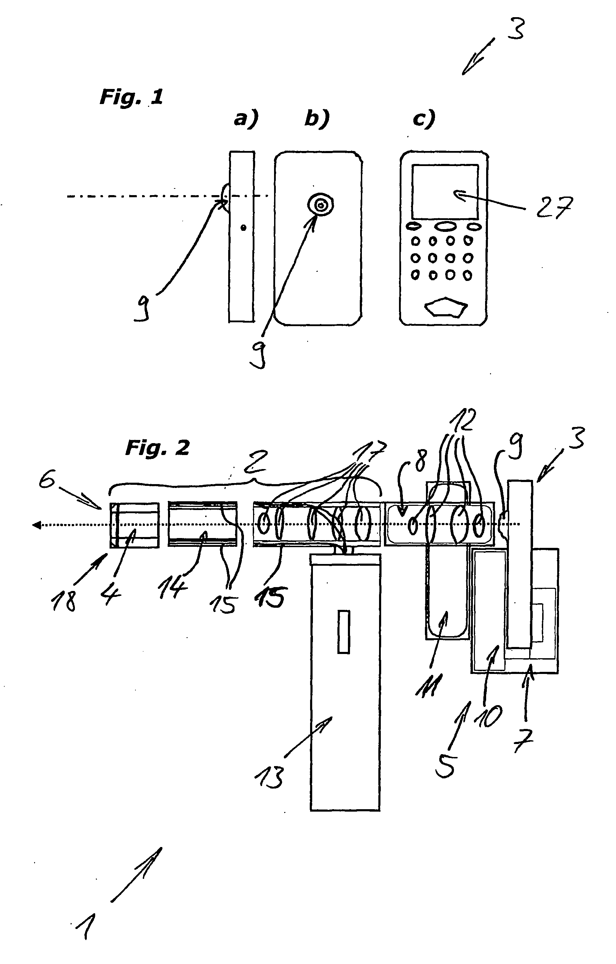

Eine im Ganzen 1 mit bezeichnete Vorrichtung zur Aufnahme und Verarbeitung eines Bildes in einem Vergleichsbeispiel ist in Fig. 2 erkennbar. Die Vorrichtung weist eine Bildübertragungseinrichtung 2 und eine Bildverarbeitungseinrichtung 3, welches als Kamerahandy ausgebildet ist, auf. Die Bildübertragungseinrichtung 2 überträgt ein Bild eines Objekts vor einem Aufnahmeobjektiv 4 an eine nicht näher dargestellte Bildaufnahmeeinheit des Kamerahandys 3. Die Bildübertragungseinrichtung 2 ist dazu mit einer Adaptereinrichtung 5 lösbar mit dem Kamerahandy 3 verbunden.

Zur Ausleuchtung des Bereichs vor dem Aufnahmeobjektiv 4 und insbesondere des Objekts vor dem Aufnahmeobjektiv 4 ist eine Beleuchtungseinheit 6 vorgesehen.

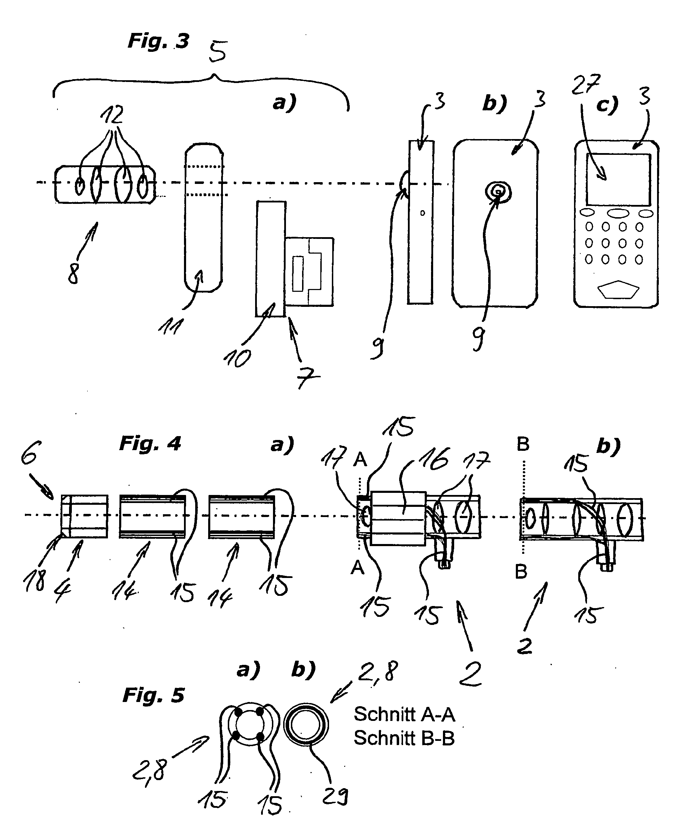

In Fig. 3 ist erkennbar, dass die Adaptereinrichtung 5 ein Verbindungselement 7 zur mechanischen Verbindung der Bildübertragungseinrichtung 2 mit dem Kamerahandy 3 sowie einen optischen Adapter 8 zur Kopplung der Bildübertragungseinrichtung 2 mit der Kameraoptik 9 des Kamerahandys 3 aufweist. Das Verbindungselement 7 ist dabei als Halterung 10 mit Schnappverschluss zur Aufnahme des Kamerahandys 3 ausgebildet, welche an einer Halteplatte 11 angeordnet ist. An der Halteplatte 11 ist außerdem der optische Adapter 8 mit einem optischen Linsensystem 12 zur optischen Anpassung der Bildübertragungseinrichtung an die Kameraoptik 9 des Kamerahandys 3 befestigt.

Bei dem in den Figuren dargestellten Kamerahandy 3 ist die Kameraoptik 9 in einem gemeinsamen Gehäuse zusammen mit dem Mobiltelefon angeordnet, wobei die von außen zugängliche Objektivöffnung der Kameraoptik 9 an der Rückseite des Kamerahandys 3 angeordnet ist. Dadurch kann das Kamerahandy 3 in vorteilhafter Weise in der Halterung 10 seitlich gehalten sein und der optische Adapter 8 an der Rückseite des Kamerahandys 3 mit der Objektivöffnung der Kameraoptik 9 verbunden sein, wobei gleichzeitig eine ungehinderte Bedienung sowie der freie Blick auf eine Anzeigeeinheit 27 des Kamerahandys 3 von der Vorderseite des Kamerahandys 3 gegeben ist.

In dem in Fig. 2 gezeigten Beispiel ist ein Handgriff 13 vorgesehen, mit welchem die Vorrichtung 1 mit einer Hand gehalten und insbesondere auch teilweise bedient (beispielsweise Auslösen der Bildaufnahme) werden kann. In dem Handgriff 13 sind für den Betrieb der Beleuchtungseinheit 6 eine nicht näher dargestellte Stromversorgung (zum Beispiel Batterien oder Akkus) sowie eine ebenfalls nicht dargestellte Lichtquelle (LED, Glühlampe) integriert.

In den Fig. 2 und 4 sind zwischen der Bildübertragungseinrichtung 2 und dem Aufnahmeobjektiv 4 ein oder mehrere optische, lichtführende Distanzelemente 14 erkennbar, mit denen die Vergrößerung des Objekts vor dem Aufnahmeobjektiv 4 bei der Abbildung auf der Bildaufnahmeeinheit des Kamerahandys 3 eingestellt werden kann. Die Gesamtlänge der eingesetzten optischen, lichtführenden Distanzelemente 14 stellt damit ein Maß für die Vergrößerung der Bildübertragungseinrichtung 2 dar. Jedes einzelne Distanzelement 14 kann zusätzlich in sich selbst längenverstellbar sein. Die Distanzelemente 14 weisen zur Kopplung untereinander sowie mit dem Aufnahmeobjektiv 4 und der Bildübertragungseinrichtung 2 an ihren Enden Kupplungen auf, welche als Schraubkupplung, Bajonettkupplung oder dergleichen Kupplungsmechanismus ausgebildet sein kann.

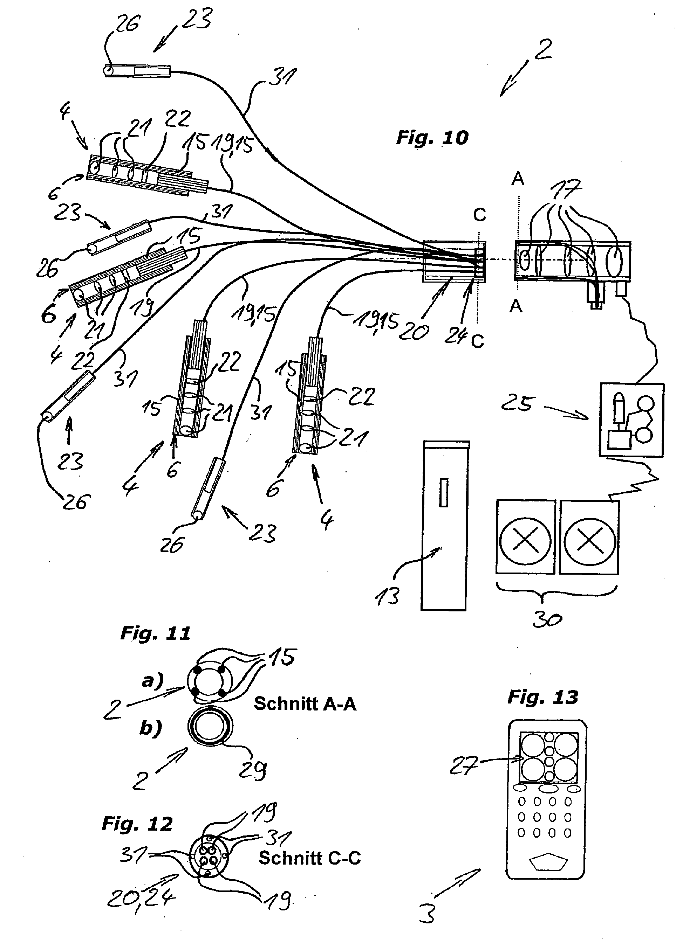

Die Beleuchtungseinheit 6 weist um das Aufnahmeobjektiv 4 herum angeordnete Lichtleiter 15 (Fig. 5a, 8a, 11a) auf, um den Bereich vor dem Aufnahmeobjektiv 4 möglichst gleichmäßig auszuleuchten. Die Lichtleiter 15 können dabei punktförmig als Enden von Lichtleitern 15 (Fig. 5a, 8a, 11a) oder auch als Ringlichtelement 29 (Fig. 5b, 8b, 11b) ausgebildet sein. Die Lichtleiter 15 verlaufen von der das Licht erzeugenden Lichtquelle in dem Handgriff 13 bis zum Aufnahmeobjektiv 4 innerhalb oder außerhalb der Bildübertragungseinrichtung 2 optisch vollständig getrennt von der optischen Bildübertragung, um störende Streustrahlen zwischen den beiden Übertragungswegen von Licht und Bild zu vermeiden. In den in den Figuren gezeigten Ausführungsbeispielen sind die Lichtleiter 15 dazu zwischen einem äußeren rohrförmigen Gehäuse und einem inneren rohrförmigen Gehäuse der Bildübertragungseinrichtung angeordnet.
Die Lichtleiter 15 können unterschiedliche Fasertypen aufweisen in Bezug auf den Akzeptanzwinkel und die übertragbare Wellenlänge. (UV-Licht, sichtbares Licht, IR-Licht). Die Übergangsstelle zwischen Lichtquelle und Lichtleiter 15 kann als ein konisch gezogener Faserkegel ausgebildet sein, um eine Lichtverstärkung und eine Vollnutzung der Lichtleiter 15 zu erreichen. Die ringförmig um das Aufnahmeobjektiv 4 angeordneten Enden der Lichtleiter 15 und/oder auch die Lichtquelle können dabei verschiedenartig ausgebildet sein und Licht mit unterschiedlichen Wellenlängen zur Erzeugung eines Mischlichts abstrahlen. Mit Hilfe dieses Mischlichts ist eine gezielte Anpassung oder auch gewünschte Verfälschung des Bildeindrucks erreichbar. Anstelle einer normalen Lichtquelle kann auch eine oder mehrere in Fig. 10 erkennbare Hochleistungslichtquellen 30 zur Speisung der Lichtleiter 15 eingesetzt werden, um die Lichtstärke im Bereich vor dem Aufnahmeobjektiv 4 zu erhöhen.

In Fig. 4a ist ein Fokussierring 16 zur Justierung der Brennweite der Bildübertragungseinrichtung 2 vorgesehen. Der Fokussierring 16 dient zur Einstellung der Bildschärfe mit Hilfe einer Linsenverschiebung in einem optischen Linsensystem 17 der Bildübertragungseinrichtung 2. Der Fokussierring 16 kann gleichzeitig eine Zoomfunktion zur gleichzeitigen Einstellung von Vergrößerung und Schärfe des Bildes aufweisen.

An dem in Fig. 2 und 4a erkennbaren Aufnahmeobjektiv 4 kann ein Distanzring 18 an der dem Objekt zugewandten Seite aufgesetzt werden, um das Aufnahmeobjektiv 4 beispielsweise direkt auf das abzubildende Objekt aufzusetzen und so extreme Nahaufnahmen ähnlich eines Mikroskops zu ermöglichen. Der Distanzring 18 kann zusätzlich optische Linsen 21, 22 oder dergleichen optische Elemente beinhalten und durch Verdrehung gegenüber dem Distanzelement 14 eine Feineinstellung der Bildschärfe ermöglichen. Mit dem Distanzring 18 kann außerdem eine Prismenumlenkung des Lichtes vorgenommen werden, um Streiflicht oder eine Dunkelfeldbeleuchtung des Objektbereichs zur Kontraststeigerung zu erreichen. Dabei sind verschiedene Winkeleinstellungen möglich.
Der Distanzring 18 kann mit einer optischen Glasplatte abgeschlossen sein. Diese Glasplatte kann als eine Strich- oder Rasterplatte mit einer Skala ausgebildet sein, um ein vergleichendes "Messen" zu ermöglichen.

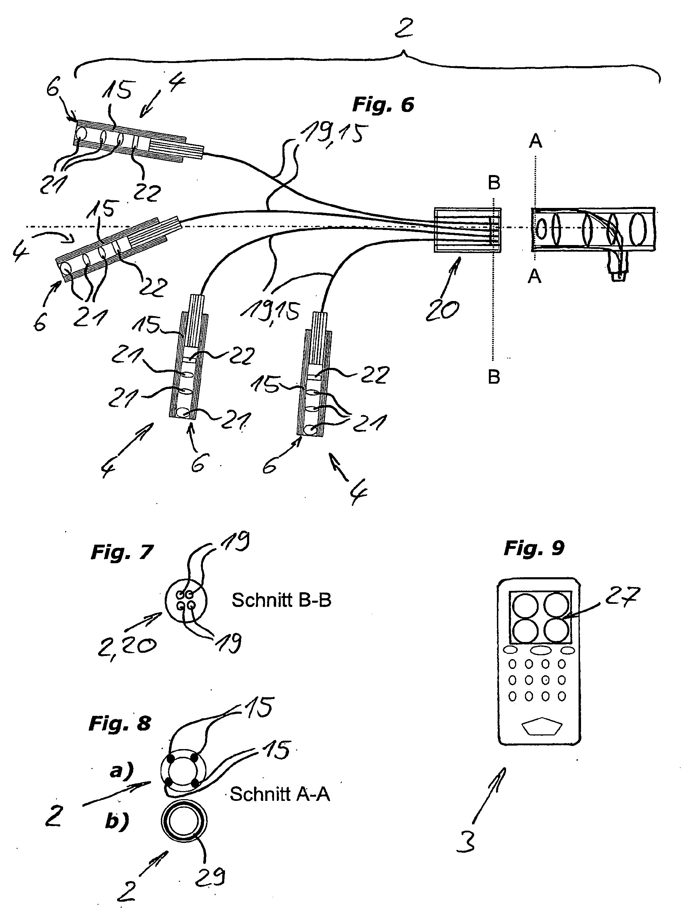

Ausführungsformen der Erfindung mit mehreren, voneinander unabhängigen optischen Übertragungskanälen sind in den Fig. 6 bis 13 dargestellt. Die Bildübertragungseinrichtung 2 weist dabei zur Bildübertragung das optische Linsensystem 17 sowie mehrere damit verkoppelte, flexibel ausgebildete Bildleiter 19 auf, welche eine jeweils unabhängige Bewegung ermöglichen. Die Bildleiter 19 können dabei beispielsweise Auflösungen von 6000 bis 70000 Pixel aufweisen und insbesondere für Anwendungen mit Fluoreszenzanteilen in dem zu übertragenden Bildinhalt als Quarzbildleiter ausgebildet sein. Je nach Anwendung können für die einzelnen optischen Übertragungskanäle unterschiedlich geartete Bildleiter 19 verwendet werden, deren Bildinhalte in Qualität und Größe unterschiedlich sind.

Jedem optischen Übertragungskanal ist dabei jeweils ein Aufnahmeobjektiv 4 zugeordnet. Auf der Bildaufnahmeeinheit des Kamerahandys 3 können dadurch mehrere Bilder gleichzeitig abgebildet werden, sodass eine gleichzeitige Anzeige mehrerer Bilder von Objekten oder Objektbereichen auf der Anzeigeeinheit 27 des Kamerahandys 3 möglich ist. Jedem Aufnahmeobjektiv 4 ist jeweils eine Beleuchtungseinheit 6 zugeordnet, wobei die Beleuchtungseinheiten 6 jeweils einen Lichtleiter 15 aufweisen, welche parallel zu dem Bildleiter 19 verlaufen.
Für den Anschluss der in den Fig. 6 bis 13 erkennbaren vier unabhängigen Bildleiter 19 an das optische Linsensystem der Bildübertragungseinrichtung 2 sowie für den Anschluss der Lichtleiter 15 ist ein Verteilerelement 20 vorgesehen. Das Verteilerelement 20 ist so gestaltet, dass ein Übersprechen von Licht und Bildern nicht stattfinden kann. In dem Verteilerelement 20 geschieht auch die gleichmäßige Lichtverteilung auf die Beleuchtungseinheiten 6 der einzelnen optischen Übertragungskanäle.

In den Fig. 6 und 10 sind optische Elemente 21, 22 in den Aufnahmeobjektiven 4 und/oder deren Distanzringen 18 erkennbar. Dabei kann jedes Aufnahmeobjektiv 4 anders ausgebildet sein. Die optischen Elemente können beispielsweise zusätzliche Vergrößerungs- oder Verzerrungslinsen 21 oder auch Wellenlängen-Filter 22 sein.

Wie in der Ausführungsform in Fig. 10 erkennbar, können zusätzlich zu den optischen Übertragungskanälen zur Übertragung von Bildinformationen über Signalleitungen 31 angeschlossene Sensorelemente 23 vorgesehen sein, um andere physikalische Größen aufzunehmen und diese Informationen zusätzlich zu der Bildinformation bereitzustellen. Dabei kann vorteilhafterweise jeweils ein Sensorelement 23 einem optischen Übertragungskanal mit dessen Aufnahmeobjektiv 4 zugeordnet sein, um die Messwerte mit der Bildinformation zu verknüpfen, das heißt dass ein Bild des Ortes der Messung auch als Bild-Information zur Verfügung steht und auf der Anzeigeeinheit 27 des Kamerahandys 3 diese Bildinformation gleichzeitig mit dem Messwert angezeigt werden kann. Die Sensorelemente 23 können beispielsweise auch als Lichtsensor ausgebildet sein, um die Menge des von den Lichtleitern 15 abgestrahlten Lichts zu messen und mit Hilfe einer Lichtmengenregeleinrichtung 25 zu regeln.

An den Sensorelementen 23 kann zur Feinjustierung jeweils ein Einstellelement 26 angeordnet sein. Bei einer Lichtmengenmessung kann das Einstellelement 26 auch als Vorsatzfokussierlinse ausgebildet sein, um zwischen dem eigentlichen Lichtsensor und der Messstelle einen räumlichen Abstand herzustellen, zum Beispiel bei hohen Temperaturen an der Messstelle. Eine andere, nicht dargestellte Ausführungsform sieht vor, dass derartige Lichtsensoren beispielsweise als Lichtleiter ausgebildet sind, welche das Licht an dem Aufnahmeobjektiv 4 aufnehmen und an einen Lichtsensor in der Lichtmengenregeleinrichtung 25 leiten.

Zum Anschluss der Signalleitungen 31 der Sensorelemente 23 an das Kamerahandy 3 ist ein Sensorverbindungselement 24 vorgesehen, welches insbesondere mit einer nicht näher dargestellten Datenschnittstelle des Kamerahandys 3 und/oder der Lichtmengenregeleinrichtung 25 in Funktionsverbindung steht.

Durch eine entsprechende Verkapselung kann für die Vorrichtung 1, insbesondere für die Lichtquelle und das Kamerahandy 3 auch ein Ex-Schutz erreicht werden, um die Vorrichtung 1 auch in explosionsgefährdeten Räumen einsetzen zu können.

## Patentansprüche

1. Vorrichtung (1) zur Aufnahme und Verarbeitung eines Bildes mit einer Bildübertragungseinrichtung (2) und einer Bildverarbeitungseinrichtung,
wobei die Bildverarbeitungseinrichtung ein Kamerahandy (3) mit einer bildanfnahmeeinheit ist, die Bildübertragungseinrichtung (2) mehrere optische Übertragungskanäle aufweist, so dass mehrere Bilder von Objekten oder Objektbereichen gleichzeitig zu der Bildaufnahmeeinheit des Kamerahandys (3) übertragen werden hönnen, wobei jedem Übertragungskanal jeweils ein Aufnahmeobjektiv (4) sowie ein optisches Linsensystem (17) und/oder ein Bildleiter (19) zugeordnet ist, wobei ferner die Aufnahmeobjektive (4) wechselbar sind, die Bildübertragungseinrichtung (2) zur Übertragung von Bildern eines oder mehrerer Objekte vor dem jeweiligen Aufnahmeobjektiv (4) zu der Bildaufnahmeeinheit des Kamerahandys (3) mittels einer Adaptereinrichtung (5) lösbar mit dem Kamerahandy (3) verbunden ist, und wobei eine Beleuchtungseinheit (6) zur Ausleuchtung des Bereichs vor einem der Aufnahmeobjektive (4) vorgesehen ist.

2. Vorrichtung nach Anspruch 1, **dadurch gekennzeichnet, dass** die Adaptereinrichtung (5) wenigstens ein Verbindungselement (7) zur mechanischen Verbindung der Bildübertragungseinrichtung (2) mit dem Kamerahandy (3), wenigstens einen optischen Adapter (8) zur Kopplung der Bildübertragungseinrichtung (2) mit der Kameraoptik (9) des Kamerahandys (3) und vorzugsweise einen Handgriff (13) aufweist.

3. Vorrichtung nach Anspruch 1 oder 2, **dadurch gekennzeichnet, dass** die Bildübertragungseinrichtung (2) wenigstens ein wechselbares Makroobjektiv (4) aufweist.

4. Vorrichtung nach Anspruch 3, **dadurch gekennzeichnet, dass** an dem Makroobjektiv (4) ein Distanzring (18) zum direkten Aufsetzen des Makroobjektivs (4) auf den abzubildenden Gegenstand vorgesehen ist.

5. Vorrichtung nach einem der Ansprüche 3 oder 4, **dadurch gekennzeichnet, dass** an dem Makroobjektiv (4) eine im Wesentlichen transparente Strich- oder Rasterplatte zum Messen von Abständen oder dergleichen Maßen im aufgenommenen Bild vorgesehen ist.

6. Vorrichtung nach einem der Ansprüche 3 bis 5, **dadurch gekennzeichnet, dass** die Beleuchtungseinheit (6) vorzugsweise ringförmig um die Öffnung des Makroobjektivs (4) angeordnet ist.

7. Vorrichtung nach Anspruch 6, **dadurch gekennzeichnet, dass** jedem der optischen Übertragungskanäle jeweils eine Beleuchtungseinheit (6) zugeordnet ist.

8. Vorrichtung nach einem der Ansprüche 4 bis 7, **dadurch gekennzeichnet, dass** vorzugsweise am Aufnahmeobjektiv (4) ein Fokussierring (16) zur Justierung der Brennweite des Aufnahmeobjektivs (4) und/oder der Bildübertragungseinrichtung (2) vorgesehen ist und dass der Fokussierring (16) an dem Distanzring (18) angeordnet ist.

9. Vorrichtung nach einem der Ansprüche 1 bis 8, **dadurch gekennzeichnet, dass** die Adaptereinrichtung (5) und/oder die Bildübertragungseinrichtung (2) wenigstens ein vorzugsweise in seiner Länge verstellbares Distanzelement (14) aufweist.

10. Vorrichtung nach einem der Ansprüche 4 bis 9, **dadurch gekennzeichnet, dass** vorzugsweise am Aufnahmeobjektiv (4) ein Zoom-Ring zur Justierung der Vergrößerung des Aufnahmeobjektivs (4) und/oder der Bildübertragungseinrichtung (2) vorgesehen ist und dass der Zoom-Ring an dem Distanzring (18) angeordnet ist.

11. Vorrichtung nach einem der Ansprüche 1 bis 10, **dadurch gekennzeichnet, dass** vorzugsweise benachbart zum Aufnahmeobjektiv (4) wenigstens ein Sensorelement (23), beispielsweise ein Temperatur-, Strahlungs-, oder Feuchtesensor zur Erfassung wenigstens einer physikalischen Messgröße, wie beispielsweise der Temperatur oder von Strahlung einer bestimmten Wellenlänge (Licht) vorgesehen ist.

12. Verwendung einer Vorrichtung nach einem der Ansprüche 1 bis 11 zur Kontrolle und Überwachung von Inspektionsstellen, vorzugsweise in Hohlräumen in Maschinen, Fahrzeugen, Produktionsanlagen oder dergleichen technischen Vorrichtungen und zur vorzugsweise drahtlosen Übertragung der aufgenommenen Bildinhalte an eine räumlich vom Ort der Bildaufnahme getrennte elektronische Empfangseinrichtung, beispielsweise an wenigstens ein zweites Kamerahandys oder an wenigstens einen Computer.

13. Verwendung einer Vorrichtung nach einem der Ansprüche 1 bis 11 zur Kontrolle von Körperhöhlungen und/oder -öffnungen von Menschen oder Tieren und zur vorzugsweise drahtlosen Übertragung der aufgenommenen Bildinhalte an eine räumlich vom Ort der Bildaufnahme getrennte elektronische Empfangseinrichtung, beispielsweise an wenigstens ein zweites Kamerahandys oder an wenigstens einen Computer.

14. Verwendung einer Vorrichtung nach einem der Ansprüche 1 bis 11 zur vergrößerten Abbildung von Gegenständen, insbesondere der Oberflächen der Gegenstände und zur vorzugsweise drahtlosen Übertragung der aufgenommenen Bildinhalte an eine räumlich vom Ort der Bildaufnahme getrennte elektronische Empfangseinrichtung, beispielsweise an wenigstens ein zweites Kamerahandys oder an wenigstens einen Computer.

15. Verwendung einer Vorrichtung nach einem der Ansprüche 1 bis 11 zur Kontrolle und Überwachung von Inspektionsstellen, vorzugsweise in Hohlräumen in Maschinen, Fahrzeugen, Produktionsanlagen oder dergleichen technischen Vorrichtungen mittels einer fest installierten Bildübertragungseinrichtung (2) und/oder Adaptereinrichtung (5), an welche das Kamerahandy (3) in Gebrauchsstellung gekoppelt ist und zur vorzugsweise drahtlosen Übertragung der aufgenommenen Bildinhalte an eine räumlich vom Ort der Bildaufnahme getrennte elektronische Empfangseinrichtung, beispielsweise an wenigstens ein zweites Kamerahandys oder an wenigstens einen Computer und/oder einen externen größeren Computermonitor.

## Claims

1. Device (1) for capturing and processing an image, having an image transmission device (2) and an image processing device, the image processing device being a mobile camera phone (3) having an image capture unit, the image transmission device (2) having a plurality of optical transmission channels so that a plurality of images of objects or object areas can be transmitted simultaneously to the image capture unit of the mobile camera phone (3), each transmission channel being associated with a photographic lens (4) and an optical lens system (17) and/or an image conductor (19), while in addition the photographic lenses (4) can be changed, the image transmission device (2) is releasably connected to the mobile camera phone (3) for transmitting images of one or more objects in front of the photographic lens (4) to the image capture unit of the mobile camera phone (3) by means of an adaptor device (5), and wherein a lighting unit (6) is provided for illuminating the area in front of one of the photographic lenses (4).

2. Device according to claim 1, **characterised in that** the adaptor device (5) comprises at least one connecting element (7) for mechanically connecting the image transmission device (2) to the mobile camera phone (3), at least one optical adaptor (8) for coupling the image transmission device (2) to the optical system (9) of the mobile, camera phone (3) and preferably a handle (13).

3. Device according to claim 1 or 2, **characterised in that** the image transmission device (2) comprises at least one changeable macro-lens (4).

4. Device according to claim 3, **characterised in that** a spacer ring (18) is provided on the macro-lens (4) for placing the macro-lens (4) directly on the object which is to be photographed.

5. Device according to one of claims 3 or 4, **characterised in that** a substantially transparent reticule or grid plate for measuring distances or similar dimensions in the image captured is provided on the macro-lens (4).

6. Device according to one of claims 3 to 5, **characterised in that** the lighting unit (6) is preferably arranged in an annular configuration about the aperture of the macro-lens (4).

7. Device according to claim 6, **characterised in that** a lighting unit (6) is associated with each of the optical transmission channels.

8. Device according to one of claims 4 to 7, **characterised in that** preferably a focusing ring (16) is provided on the photographic lens (4) for adjusting the focal length of the photographic lens (4) and/or the image transmission device (2) and **in that** the focusing ring (16) is arranged on the spacer ring (18).

9. Device according to one of claims 1 to 8, **characterised in that** the adaptor device (5) and/or the image transmission device (2) comprises at least one spacer element (14) which is preferably adjustable in length.

10. Device according to one of claims 4 to 9, **characterised in that** a zoom ring for adjusting the magnification of the photographic lens (4) and/or the image transmission device (2) is preferably provided on the photographic lens (4) and **in that** the zoom ring is arranged on the spacer ring (18).

11. Device according to one of claims 1 to 10, **characterised in that** at least one sensor element (23), for example a temperature, radiation or humidity sensor is preferably provided adjacent to the photographic lens (4), for detecting at least one physical variable such as for example the temperature or radiation of a certain wavelength (light).

12. Use of a device according to one of claims 1 to 11 for checking and monitoring inspection sites, preferably in cavities in machines, vehicles, production plants or similar technical equipment and for preferably wireless transmission of the image contents captured to an electronic receiver which is spatially separate from the location of the image capture, for example to at least one second mobile camera phone or to at least one computer.

13. Use of a device according to one of claims 1 to 11 for checking body cavities and/or orifices in humans or animals and for preferably wireless transmission of the image contents captured to an electronic receiver which is spatially separate from the location of the image capture, for example to at least one second mobile camera phone or to at least one computer.

14. Use of an apparatus according to one of claims 1 to 11 for the magnified imaging of objects, particularly the surfaces of the objects, and for preferably wireless transmission of the image contents captured to an electronic receiver which is spatially separate from the location of the image capture, for example to at least one second mobile camera phone or to at least one computer.

15. Use of a device according to one of claims 1 to 11 for checking and monitoring inspection sites, preferably in cavities in machines, vehicles, production plants or similar technical equipment using a fixedly installed image transmission device (2) and/or adaptor device (5) to which the mobile camera phone (3) is coupled in the position of use and for preferably wireless transmission of the image contents captured to an electronic receiver which is spatially separate from the location of the image capture, for example to at least one second mobile camera phone or to at least one computer and/or an external larger computer monitor.

## Revendications

1. Dispositif (1) de capture et de traitement d'une image comprenant un dispositif de transmission d'image (2) et un dispositif de traitement d'image, le dispositif de traitement d'image étant un téléphone portable avec appareil photo intégré (3) comprenant une unité de capture d'image, le dispositif de transmission d'image (2) présentant plusieurs canaux de transmission optique, en sorte que plusieurs images d'objets ou de parties d'objets peuvent être transmises en même temps à l'unité de capture d'image, un objectif de capture (4) ainsi qu'un système de lentilles optiques (17) et/ou un transmetteur d'image (19) étant associés à chaque canal de transmission, les objectifs de capture (4) étant en outre interchangeables, le dispositif de transmission d'image (2) étant relié de manière détachable au téléphone portable avec appareil photo intégré (3) au moyen d'un dispositif adaptateur (5) pour la transmission d'images d'un ou plusieurs objets situés devant l'objectif de capture (4) respectif à l'unité de capture d'image du téléphone portable avec appareil photo intégré (3), et une unité d'éclairage (6) étant prévue pour éclairer la zone située devant un des objectifs de capture (4).

2. Dispositif selon la revendication 1, **caractérisé en ce que** le dispositif adaptateur (5) présente au moins un élément de connexion (7) pour la connexion mécanique du dispositif de transmission d'image (2) avec le téléphone portable avec appareil photo intégré (3), au moins un adaptateur optique (8) pour le couplage du dispositif de transmission d'image (2) avec l'optique d'appareil photo (9) du téléphone portable avec appareil photo intégré (3) et de préférence une poignée (13).

3. Dispositif selon la revendication 1 ou 2, **caractérisé en ce que** le dispositif de transmission d'image (2) présente au moins un objectif macro (4) interchangeable.

4. Dispositif selon la revendication 3, **caractérisé en ce qu'**une bague d'écartement (18) pour la pose directe de l'objectif macro (4) sur l'objet à représenter est prévue sur l'objectif macro (4).

5. Dispositif selon l'une des revendications 3 ou 4, **caractérisé en ce qu'**une plaque graduée ou quadrillée essentiellement transparente est prévue sur l'objectif macro (4) pour mesurer des distances ou des dimensions analogues sur l'image capturée.

6. Dispositif selon l'une des revendications 3 à 5, **caractérisé en ce que** l'unité d'éclairage (6) est de préférence disposée en anneau autour de l'ouverture de l'objectif macro (4).

7. Dispositif selon la revendication 6, **caractérisé en ce qu'**une unité d'éclairage (6) est associée à chacun des canaux de transmission optique.

8. Dispositif selon l'une des revendications 4 à 7, **caractérisé en ce qu'**une bague de mise au point (16) pour ajuster la distance focale de l'objectif de capture (4) et/ou du dispositif de transmission d'image (2) est de préférence prévue sur l'objectif de capture (4) et que la bague de mise au point (16) est disposée sur la bague d'écartement (18).

9. Dispositif selon l'une des revendications 1 à 8, **caractérisé en ce que** le dispositif adaptateur (5) et/ou le dispositif de transmission d'image (2) présente au moins un élément d'écartement (14) de préférence réglable en longueur.

10. Dispositif selon l'une des revendications 4 à 9, **caractérisé en ce qu'**une bague de zoom pour ajuster l'agrandissement de l'objectif de capture (4) et/ou du dispositif de transmission d'image (2) est de préférence prévue sur l'objectif de capture (4) et que la bague de zoom est disposée sur la bague d'écartement (18).

11. Dispositif selon l'une des revendications 1 à 10, **caractérisé en ce que** de préférence au voisinage de l'objectif de capture (4), il est prévu au moins un élément capteur (23), par exemple un capteur de température, de rayonnement ou d'humidité, pour détecter au moins une grandeur de mesure physique, comme par exemple la température ou le rayonnement d'une certaine longueur d'onde (lumière).

12. Utilisation d'un dispositif selon l'une des revendications 1 à 11 pour le contrôle et la surveillance de points d'inspection, de préférence dans des espaces creux de machines, de véhicules, d'installations de production ou de dispositifs techniques analogues, et pour la transmission, de préférence sans fil, des images capturées à un dispositif électronique de réception spatialement séparé du lieu de la capture d'image, par exemple à au moins un deuxième téléphone portable avec appareil photo intégré ou à au moins un ordinateur.

13. Utilisation d'un dispositif selon l'une des revendications 1 à 11 pour le contrôle de cavités et/ou d'ouvertures du corps d'êtres humains ou d'animaux et pour la transmission, de préférence sans fil, des images capturées à un dispositif électronique de réception spatialement séparé du lieu de la capture d'image, par exemple à au moins un deuxième téléphone portable avec appareil photo intégré ou à au moins un ordinateur.

14. Utilisation d'un dispositif selon l'une des revendications 1 à 11 pour la représentation agrandie d'objets, en particulier de surfaces d'objets, et pour la transmission, de préférence sans fil, des images capturées à un dispositif électronique de réception spatialement séparé du lieu de la capture d'image, par exemple à au moins un deuxième téléphone portable avec appareil photo intégré ou à au moins un ordinateur.

15. Utilisation d'un dispositif selon l'une des revendications 1 à 11 pour le contrôle et la surveillance de points d'inspection, de préférence dans des espaces creux de machines, de véhicules, d'installations de production ou de dispositifs techniques analogues au moyen d'un dispositif de transmission d'image (2) et/ou d'un dispositif adaptateur (5) installé en position fixe, auquel le téléphone portable avec appareil photo intégré (3) est couplé en position d'utilisation, et pour la transmission, de préférence sans fil, des images capturées à un dispositif électronique de réception spatialement séparé du lieu de la capture d'image, par exemple à au moins un deuxième téléphone portable avec appareil photo intégré ou à au moins un ordinateur et/ou à un écran d'ordinateur externe plus grand.
